# EUROPÄISCHE PATENTANMELDUNG

(11) **EP 2 302 554 A2**
(43) Veröffentlichungstag der Anmeldung: **30.03.2011**
(21) Anmeldenummer: 10009475.4
(22) Anmeldetag: 13.09.2010
(51) Int. Cl.: G06F 21/00

(54) **Verfahren zur Kennzeichnung eines in einem Computerspeichersystem enthaltenen Computerprogrammabschnitts**

(30) Priorität: 14.09.2009 DE 102009041098
(71) Anmelder: Zynamics GmbH, 44787 Bochum (DE)
(72) Erfinder: Dullien, Thomas, 44787 Bochum (DE); Meyer-Eppler, Sören, 44159 Münster (DE)
(74) Vertreter: Sparing, Rolf Klaus

(57) **Zusammenfassung**

Die Erfindung betrifft ein Verfahren zur Kennzeichnung eines in einem Computerspeichersystem enthaltenen Computerprogrammabschnitts, umfassend die Schritte Zergliederung des Computerprogrammabschnitts in Segmente, wobei durch in dem Computerprogrammabschnitt enthaltene Programmbefehle eine Programmablaufbeziehung zwischen den Segmenten definierbar ist, und Bestimmung von Kenndaten, die der Programmablaufbeziehung der Segmente zuordenbar sind. Ein Verfahren zur Kennzeichnung eines in einem Computerspeichersystems enthaltenen Computerprogrammabschnitts, welches eine zuverlässige und effiziente Kennzeichnung und Identifikation des Computerprogremmabschnitts ermöglicht, wird erfindungsgemäß dadurch geschaffen, dass die Kenndaten zu einer den Computerprogrammabschnitt identifizierenden Signatur verdichtet werden.

## Beschreibung

Die Erfindung betrifft ein Verfahren zur Kennzeichnung eines in einem Computerspeichersystem enthaltenen Computerprogrammabschnitts nach dem Oberbegriff des Anspruchs 1.

Unter einem Computerprogramm versteht man eine Mehrzahl von in einem Computersystem durch einen oder mehrere Mikroprozessoren in einer bestimmten Reihenfolge abzuarbeitenden Programmanweisungen. Damit die Programmanweisungen durch den oder die Mikroprozessoren ausgeführt werden können, liegen sie in einem für den Mikroprozessor unmittelbar verständlichen und für den ausführenden Mikroprozessor spezifischen Binärformat vor. Die Arbeitsanweisungen sind in diesem für den Mikroprozessor spezifischen Format für einen menschlichen Betrachter, beispielsweise einen Programmierer, in der Regel nur sehr schwer oder gar nicht verständlich. Um die Erstellung eines Computerprogramms zu erleichtern beziehungsweise erst zu ermöglichen, finden heutzutage in der Regel als Hochsprachen bezeichnete Programmiersprachen Verwendung. Bei solchen Hochsprachen werden von dem Mikroprozessor abzuarbeitende Programmanweisungen durch den Programmierer in einer für Menschen verständlichen Sprache formuliert und in einem sogenannten Quelltext abgelegt. Damit die in dem Quelltext enthaltenen Programmanweisungen durch den Mikroprozessor ausgeführt werden können, ist eine Transformation in das für den Mikroprozessor abarbeitbare spezifische Format notwendig. Hierzu bestehen grundsätzlich zwei Möglichkeiten: Zum Einen kann der gesamte Quelltext vor Ausführung durch den Mikroprozessor vollständig in das für den Mikroprozessor spezifische Format übersetzt werden; zum Anderen besteht die Möglichkeit, jede Programmanweisung des Quelltextes zunächst durch ein weiteres Computerprogramm, den sogenannten Interpreter, zu interpretieren und in die zur Ausführung der Arbeitsanweisung notwendigen, für den Mikroprozessor spezifischen Programmanweisungen umzuwandeln. Ebenso sind Mischformen bekannt, wie Sie beispielsweise in der Programmiersprache Java realisiert sind: Hier erfolgt zunächst eine vollständige Übersetzung des Quelltextes in einen noch nicht für den Mikroprozessor spezifischen Bytecode und eine anschließende Interpretation des Bytecodes zur Erzeugung von für den Mikroprozessor spezifischen Programmanweisungen. Aus Effizienzgründen erfolgt heutzutage überwiegend eine vollständige Übersetzung eines Quellcodes vor der ersten Abarbeitung der Programmanweisungen durch einen Mikroprozessor. Hierzu wird ein sogenannter Compiler verwendet.

Die von einem Mikroprozessor in einer bestimmten Reihenfolge zu verarbeitenden Programmanweisungen liegen in der Regel nicht in dieser spezifischen Reihenfolge in einem Computerspeichersystem vor. Vielmehr sind jeweils eine oder mehrere unmittelbar hintereinander auszuführende Programmanweisungen zu Gruppen zusammengefasst, wobei diese Gruppen durch Programmablaufanweisungen, die beispielsweise als Sprunganweisungen oder Funktionsaufrufe ausgebildet sind, miteinander verbunden sind. Diese Struktur eines Computerprogramms spiegelt sich regelmäßig auch in dem zugehörigen, in einer Hochsprache geschriebenen Quelltext wieder, der ebenfalls in Funktionen oder Unterprogramme unterteilt ist sowie durch Verzweigungen oder Sprunganweisungen miteinander verbundene Blöcke von Programmanweisungen aufweist. Eine eindeutige Zuordnung von Blöcken von Programmanweisungen im Quelltext und Gruppen von Programmanweisungen im mikroprozessorspezifischen Format liegt im Allgemeinen jedoch nicht vor.

Die Übersetzung eines in einer Hochsprache vorliegenden Quelltextes in mikroprozessorspezifische Programmanweisungen mittels eines Compilers führt nicht zu einem eindeutig bestimmten Computerprogramm, d.h. zu einer notwendig eindeutig definierten Sequenz von im Binärformat vorliegenden mikroprozessorspezifischen Programmanweisungen. Dies ist zum einen dann der Fall, wenn die Übersetzung des Hochsprachen-Quelltextes für eine Abarbeitung auf nicht miteinander Befehlskompatiblen, unterschiedlichen Mikroprozessoren erfolgt. Aber auch dann, wenn die Übersetzung für einen identischen Typus von Mikroprozessor erzeugt wird, können verschiedene Übersetzungen eines identischen Hochsprachen-Quelltextes zu im Binärformat unterschiedlichen Computerprogrammen führen. Ein Grund hierfür ist in Optimierungen zu sehen, welche der Compiler zur Erzielung eines möglichst effizient abarbeitbaren Computerprogramms vornimmt. So gehören eine Änderung der Abarbeitungsreihenfolge von Programmanweisungen, die Invertierung von Sprungbedingungen und das Zusammenfassen von eigentlich durch einen Sprungbefehl miteinander verbundener Programmanweisungen zu einer zusammengehörigen Gruppe zu gängigen Optimierungsverfahren von Compilern. Je nach Wahl des Optimierungsgrades durch den Compiler und andere Umgebungsbedingungen entstehen daher durch Übersetzung mittels des Compilers aus einem identischen Hochsprachen-Quellcode sehr unterschiedliche Computerprogramme. Problematisch ist hierbei, dass bei Vorliegen zweier in ihrer spezifischen Abfolge von Mikroprozessoranweisungen unterschiedlichen Computerprogrammen ohne Vorliegen des Quelltextes nicht festgestellt werden kann, ob diese tatsächlich durch Übersetzung des identischen Quelltextes erzeugt wurden. Dies trifft umso mehr für Übersetzungen eines identischen Quelltextes mit unterschiedlichen Compilern oder für unterschiedliche Ziel-Mikroprozessoren zu.

Zwar besteht die Möglichkeit, Computerprogramme durch Rückübersetzung (Disassemblierung) in einen für den Menschen lesbaren, jedoch maschinen nahen Assembler-Quelltext umzuwandeln. Problematisch ist hierbei jedoch, dass zum Einen durch die vorhergehende Übersetzung des Hochsprachen-Quelltextes in das mikroprozessorspezifische Computerprogramm wichtige Informationsträger wie beispielsweise Funktions-oder Variablennamen verloren gegangen sind; andererseits geben die durch Disassemblierung gewonnenen Assembler-Quelltexte die von dem Compiler vorgenommenen Optimierungen wieder, so dass auch durch Vergleich zweier durch Rückübersetzung gewonnener Assembler-Quelltexte nicht auf die Identität des ursprünglichen Hochsprachen-Quelltextes zurückgeschlossen werden kann. Diese relativ leichte Veränderbarkeit der mikroprozessorspezifischen Darstellung eines Computerprogramms ohne Änderung oder wesentliche Änderung des eigentlichen Hochsprache-Quelltextes wird insbesondere von Schadsoftware, beispielsweise Computerviren, Computer-Einbruchswerkzeugen und so weiter, ausgenutzt, um eine Erkennung von Schadsoftware in laufenden Computersystemen zu erschweren. Da in der Regel der Hochsprachen-Quelitext einer Schadsoftware unbekannt ist, können im laufenden Computerbetrieb Schadprogramme nur durch Vergleich des im Computerspeichersystem vorliegenden Computerprogramms in seiner mikroprozessorspezifischen Form mit bereits bekannten mikroprozessorspezifischen Formen von Schadprogrammen identifiziert werden. Durch einfache Neuübersetzung des Hochsprache-Quelltextes des Schadprogramms besteht die Möglichkeit, ein in seiner binären Darstellung derart verändertes Computerprogramm zu erhalten, dass das Computerprogramm von gängiger Anti-Virensoftware nicht mehr als schadhaft erkannt werden kann.

Auch außerhalb von der Erkennung von Schadsoftware ist ein zuverlässiges Verfahren zur Erkennung von Übereinstimmungen oder Unterschieden zwischen zwei oder mehr nicht im Quelltext bekannten Computerprogrammen wünschenswert, beispielsweise um unzulässige Änderungen eines Computerprogramms zu erkennen, Unterschiede zwischen verschiedenen Versionen eines Computerprogramms feststellbar zu machen oder unzulässige Verwendung von geschützten Quelltexten zu entdecken.

Die Druckschrift Thomas Dullien, Rolf Rolles, "Graph-based comparison of Executable Objects", erschienen im Konferenzband des Symposium sur la Sécurité des Technologies de l'Information et des Communications 2005, Rennes, Frankreich, 02. Juni 2005, (http://actes.sstic.org/SSTIC05/Analyse_differentielle_de_binaires/SSTIC05-article-Flake-Graph_based_comparison_of_Executable_Objects.pdf), beschreibt ein Verfahren zum Vergleich zweier in einem Computerspeichersystem enthaltener Computerprogramme. Zweck ist es, den Grad der Übereinstimmung beziehungsweise Abweichung der beiden nicht in einem Hochsprachen-Quelltext vorliegenden Computerprogramme zu bestimmen. Das Verfahren funktioniert wie folgt: Zunächst erfolgt eine Rückübersetzung der beiden in einem mikroprozessorspezifischen Format vorliegenden Computerprogramme, um jeweils einen Assembler-Quelltext zu erhalten. Anschließend folgt eine Gliederung des Computerprogramms in Computerprogrammabschnitte, wobei jeder der Computerprogrammabschnltte genau eine Funktion bzw. genau ein Unterprogramm des Computerprogramms umfasst. Die erhaltenen Computerprogrammabschnitte sind durch Programmablaufanweisungen in Form von Funktionsaufrufen bzw. Unterprogrammaufrufen miteinander verbunden, so dass eine Programmablaufbeziehung zwischen den Computerprogrammabschnitten definiert ist. Die Programmablaufbeziehung ist in Form eines aus der mathematischen Graphentheorie bekannten, ersten gerichteten Graphen darstellbar, wobei die Computerprogrammabschnitte Knoten und die die Computerprogrammabschnitte miteinander verbindenden Programmablaufanweisungen Kanten des ersten gerichteten Graphen definieren. Eine Kante verbindet dabei jeweils einen ersten Computerprogrammabschnitt (Quellknoten) mit einem zweiten Computerprogrammabschnitt (Zielknoten), wobei die Richtung der Kante durch eine von dem Quellknoten zum Zielknoten weisende Programmablaufanweisung vorgegeben ist. Die Gesamtheit der Knoten und Kanten bildet einen abstrakten Programmablaufplan des Computerprogramms ab. An die Gliederung des Computerprogramms in Computerprogrammabschnitte schließt sich eine Zergliederung jedes der Computerprogrammabschnitte in Segmente an, wobei jedes der Segmente durch unmittelbar aufeinanderfolgende Anweisungen definiert ist und wobei eine Programmablaufbeziehung der Segmente durch Sprunganweisungen, beispielsweise bedingte Anweisungen oder Schleifen-Anweisungen, definiert ist. Die Programmablaufbeziehung der Segmente ist für jeden der Computerprogrammabschnitte in Form eines zweiten gerichteten Graphen darstellbar, wobei die Segmente Knoten und die die Segmente miteinander verbindenden Programmablaufanweisungen Kanten des zweiten gerichteten Graphen definieren. Die Gesamtheit der Knoten und Kanten des zweiten gerichteten Graphen bildet einen abstrakten Programmablaufplan des jeweiligen Computerprogrammabschnitts ab. Jeder Knoten des ersten gerichteten Graphen ist dabei durch den dem zugeordneten Computerprogrammabschnitt entsprechenden zweiten gerichteten Graphen repräsentierbar, um einen vollständigen, abstrakten Programmablaufplan des Computerprogramms zu erhalten. Der Vergleich der beiden in dem Computerspeichersystem enthaltenen Computerprogramme erfolgt nun durch Vergleich der jeweils ermittelten vollständigen abstrakten Programmablaufpläne, also durch Vergleich der vollständigen, jeweils alle zweiten gerichteten Graphen enthaltende ersten gerichteten Graphen. Vorteilhaft ist dabei, dass beispielsweise durch Optimierungen des Compilers bei der Übersetzung des Hochsprachen-Quelltextes verursachte Unterschiede in der mikroprozessorspezifischen binären Darstellung der Computerprogramme in den abstrahierten Programmablaufplänen nicht oder nur zu wenigen Abweichungen führen, so dass mit hoher Zuverlässigkeit funktionell übereinstimmende und funktionell unterschiedliche beziehungsweise veränderte Bereiche der Computerprogramme identifiziert werden können. Nachteilig ist jedoch, dass der vollständige Vergleich der abstrakten Programmablaufpläne sehr aufwendig und nicht vollständig automatisiert durchführbar ist. Zur Automatisierung wird daher ein vereinfachter Vergleich durchgeführt, bei welchem die Zahl der jeweils ermittelten Knoten und Kanten verglichen wird, um eine Übereinstimmung oder Abweichung der Computerprogramme festzustellen, Dieses Verfahren weist jedoch den Nachteil hoher Fehleranfälligkeit auf, da eine tatsächlich nicht vorliegende Übereinstimmung der Programme festgestellt wird, wenn zufällig die nicht miteinander übereinstimmenden Graphen eine gleiche Anzahl an Knoten oder Kanten aufweisen.

US 7,207,038 B2 beschreibt ein Verfahren zur Erzeugung von Ablaufplänen eines ausführbaren Computerprogramms. Das Verfahren umfasst eine Gliederung des in einem Computerspeichersystem enthaltenen Computerprogramms in Computerprogrammabschnitte, welche durch Funktionsaufrufe oder Sprunganweisungen miteinander verbunden sind, und die Erstellung einer Ablaufplan-Struktur ausgehend von den identifizierten Computerprogrammabschnitten. Zweck ist die Optimierung eines nicht im Hochsprachen-Quelltext bekannten Computerprogramms hinsichtlich der Effizienz seines Ablaufs durch Veränderung der Reihenfolge von Funktionsaufrufen.

Die Druckschrift G.R. Thomson et al., "Polymorphic Malware Detection and Identification via Context-Free Grammar Homomorphism". Bell Labs Technical Journal 12(3), 2007, pp. 139-147 beschreibt ein Verfahren zur Erkennung von bisher unbekannten Abwandlungen von Computerviren, bei dem ein als Computervirus verdächtigtes Computerprogramm zunächst in Abschnitte zerlegt wird, wobei jeweils eine Funktion des Computerprogramms einen Abschnitt ausbildet. Zu jedem der Abschnitte wird ein den Programmablauf wiedergebender Flussgraph erstellt, wobei jeder der Flussgraphen als ungerichtet angesehen wird und jedem Flussgraphen eine nicht eindeutige Zahl, definiert durch die Länge des längsten einfachen (d.h. sich nicht selbst schneidenden) Pfades des Flussgraphen, zugeordnet wird. Die Flussgraphen werden in der Reihenfolge der zugeordneten Zahl sortiert - bei gleichen zugeordneten Zahlen in beliebiger Reihenfolge - und anschließend in der Reihenfolge der Sortierung mit einem Buchstaben des Alphabets als Bezeichnung versehen. Wenn eine Funktion mit der Bezeichnung A intern die Funktionen B, C und D in dieser Reihenfolge aufruft, wird der Funktion A eine als Grammatikregel bezeichnete Kennzeichnung A -> BCD zugeordnet. In der Reihenfolge der Sortierung der Funktionen wird für jede Funktion die zugehörige Grammatikregel ermittelt. Abschließend werden alle ermittelten Grammatikregeln seriell zu einem String zusammengefasst, wobei der so ermittelte String als Kennzeichnung des Computerprogramms verwendet wird. Um zu ermitteln, ob es sich bei dem Computerprogramm um eine bisher unbekannte Abwandlung eines Computervirus handelt, wird der dem Computerprogramm zugeordnete String mit den Strings bekannter Computerviren verglichen. Nachteilig an dem Verfahren ist, dass nur ganzen Computerprogrammen, nicht aber Computerprogrammabschnitten eine Kennzeichnung zugeordnet wird, so dass bereits relativ einfache Veränderungen wie das Umbetten von Programmbefehlen in neue Funktionen oder das direkte Einfügen der Programmbefehle aus Funktionen in aufrufende Funktionen (Inlining) zu stark veränderten Kennzeichnungen führt. Weiter ist nachteilig, dass der einem Computerprogramm zugeordnete String durch die beliebige Sortierung von Flussgraphen gleicher zugeordneter Länge nicht eindeutig ist. Ferner ist nachteilig, dass zu verschiedenen Computerprogrammen ermittelte Strings in der Regel eine jeweils unterschiedliche Länge aufweisen, so dass die Strings nur schwer miteinander vergleichbar sind.

Es ist die Aufgabe der Erfindung, ein Verfahren zur Kennzeichnung eines in einem Computerspeichersystem enthaltenen Computerprogrammabschnitts anzugeben, welches eine zuverlässige und effiziente Kennzeichnung und Identifikation des Computerprogrammabschnitts ermöglicht.

Diese Aufgabe wird erfindungsgemäß durch ein Verfahren mit den Merkmalen des Anspruchs 1 gelöst.

Durch die erfindungsgemäße Verdichtung der der Programmablaufbeziehung der Segmente zuordenbaren Kenndaten zu einer den Computerprogrammabschnitt identifizierenden Signatur erfolgt eine eindeutige Kennzeichnung des Computerprogrammabschnitts. Zweckmäßig erfolgt die Verdichtung der Kenndaten zu der Signatur dabei derart, dass eine möglichst eindeutige Zuordnung der Signatur zu der Programmablaufbeziehung der Segmente gewährleistet ist. Vorzugsweise lässt sich die Abbildung der Kenndaten auf die Signaturen einfach und effizient durchführen, während eine inverse Zuordnung der Signatur zu der charakterisierten Programmablaufbeziehung ohne Kenntnis der Programmablaufbeziehung nicht effizient durchführbar sein muss. Die Kenntnis nur der Signatur lässt so vorteilhaft keinen unmittelbaren Rückschluss auf die Programmablaufbeziehung zu. Übereinstimmende Signaturen zeigen mit hoher Wahrscheinlichkeit an, dass es sich um Computerprogrammabschnitte mit identischem abstrahierten Programmablaufplan und somit mit hoher Wahrscheinlichkeit um Übersetzungen eines identischen oder zumindest funktionsgleichen Quelltextes handelt. Vorteilhaft ist die Verdichtung der Kenndaten so gewählt, dass bei ausreichend großen, für reale Computerprogramme typischen Programmabschnitten die zugeordnete Signatur praktisch eindeutig ist. Die Signatur ist vorteilhaft mit geringem Speicheraufwand speicherbar und Vergleichsoperationen einfach zugänglich, so dass vorteilhaft bisher noch nicht gekennzeichnete Computerprogrammabschnitte effizient auf Übereinstimmung oder Abweichung mit bereits bekannten Computerprogrammabschnitten durch Vergleich der erzeugten Signaturen überprüfbar sind. Besonders vorteilhaft erfolgt eine Verdichtung von Kenndaten zu einer Signatur dadurch, dass eine Mehrzahl von Kenndaten erfasst wird, wobei die Mehrzahl von Kenndaten als Vektor eines Vektorraums aufgefasst und durch mathematische Faltung des Vektors in eine reelle Zahl transformiert wird.

Die Bestimmung der Kenndaten, die der Programmablaufbeziehung zuordenbar sind, erfolgt vorzugsweise durch Darstellung der Programmablaufbeziehung in einem gerichteten Graphen, wobei die Segmente die Knoten des Graphen und die die Programmablaufbeziehung definierenden Programmablaufanweisungen die Kanten des Graphen definieren. Die Kenndaten können dann auf einfache Weise durch Eigenschaften des Graphen bestimmt werden. Vorzugsweise werden Kenndaten durch Eigenschaften wenigstens einer Kante und der mit der jeweils wenigstens einen Kante verbundenen Quellknoten und Zielknoten erzeugt; besonders bevorzugt umfassen die Kenndaten Eigenschaften aller oder wenigstens einer Mehrzahl der Kanten. Zweckmäßig werden als Kenndaten die topologische Ordnung des Quellknotens einer Kante (definiert durch die maximale Anzahl an gerichteten Kanten, welche ausgehend von einem keine zugehende Kanten aufweisenden Startknoten auf direktem Weg zu dem Quellknoten führen), die Anzahl der zu dem Quellknoten hinführenden Kanten (d.h. der Eingangsgrad des Quallknotens), die Anzahl der von dem Quellknoten wegführenden Kanten (d.h. der Ausgangsgrad des Quellknotens), der Eingangsgrad des Zielknotens, der Ausgangsgrad des Zielknotens und/oder die Anzahl an Unterfunktionsaufrufen innerhalb eines Knotens als Kenndaten erfasst.

Zweckmäßig umfasst der Computerprogrammabschnitt wenigstens eine Funktion oder ein Unterprogramm eines wenigstens teilweise in dem Computerspeichersystem abgelegten Computerprogramms. Das Verfahren kann dabei unmittelbar auf einen Computerprogrammabschnitt angewendet werden, der in einem für einen Mikroprozessor unmittelbar ausführbaren Format vorliegt. Vorzugsweise erfolgt eine Anwendung des Verfahrens jedoch auf einen gegebenenfalls durch Rückübersetzung gewonnenen Assembler-Quelltext des Computerprogrammabschnitts. Es versteht sich, dass das Verfahren auch auf einen in einer Hochsprache vorliegenden Computerprogrammabschnitt, einen zu interpretierenden Computerprogrammabschnitt oder einen Bytecode, beispielsweise den Bytecode eines Java-Programms, angewendet werden kann.

Dle Zergliederung des Computerprogrammabschnitts erfolgt vorzugsweise derart, dass jedes der Segmente eine lineare Abfolge von Programmanweisungen umfasst, welche nicht durch Sprunganweisungen oder dergleichen miteinander verbunden sind, In den Segmenten enthaltene Unterprogrammaufrufe können dabei jeweils aufgelöst werden oder unaufgelöst bleiben.

Zweckmäßig wird das Verfahren durch ein Computerprogramm auf einem Computersystem mit einem Mikroprozessor durchgeführt. Ein Vorteil des Verfahrens ist dabei, dass der zu kennzeichnende Computerprogrammabschnitt auch in einem zu dem Mikroprozessor inkompatiblen Format vorliegen kann, so dass die in dem Computerprogrammabschnitt enthaltenen Programmabweisungen durch den das Verfahren durchführenden Mikroprozessor nicht selbst ausführbar sind. Gleichwohl ist ein Ausführen des Computerprogrammabschnitts auf dem das Verfahren durchführenden Computersystem möglich; insbesondere kann eine Kennzeichnung des Computerprogrammabschnitts auch im laufenden Betrieb des den Computerprogrammabschnitt umfassenden Computerprogramms erfolgen. Vorzugsweise umfasst die Zergliederung eine Identifikation von Programmablaufanweisungen des Computerprogrammabschnitts. Solche Programmablaufanweisungen können insbesondere als unbedingte Sprungbefehle, bedingte Sprungbefehle, Schleifen oder Unterfunktionsaufrufe ausgebildet sein. Die Definition von Segmenten erfolgt dann zweckmäßig durch Identifikation von Bereichen, welche keine Programmablaufanweisungen umfassen.

Das erfindungsgemäße Verfahren ermöglicht vorteilhaft eine Identifizierung von Schadsoftware im laufenden Betrieb eines Computersystems. Hierzu erfolgt eine Kennzeichnung von bekannten Schadsoftware-Computerprogrammen unter Verwendung des erfindungsgemäßen Verfahrens und Hinterlegung der durch das Verfahren ermittelten Signaturen. Durch Anwendung des erfindungsgemäßen Verfahrens auf in dem Computersystem ablaufende Computerprogrammabschnitte und Vergleich der erzeugten Signatur mit den abgelegten Signaturen bekannter Schadsoftware-Computerprogrammen, ist eine Identifikation von Schadsoftware ermöglicht, auch wenn die im Computerspeichersystem vorhandene spezifische Realisierung des Computerprogrammabschnitts bisher noch nicht als schadhaft bekannt war.

Ein erfindungsgemäßes Verfahren zur Identifizierung wenigstens eines in einem Computerspeichersystem enthaltenen Computerprogramms umfasst die Schritte Gliederung des Computerprogramms in Computerprogrammabschnitte und Anwendung des erfindungsgemäßen Verfahrens zur Kennzeichnung eines in einem Computerspeichersystem enthaltenen Computerprogrammabschnitts auf wenigstens einen der Computerprogrammabschnitte zur Ermittlung einer den Computerprogrammabschnitt identifizierenden Signatur. Vorzugsweise wird das Verfahren auf eine Mehrzahl, besonders bevorzugt auf alle Computerprogrammabschnitte angewandt, so dass eine das Computerprogramm insgesamt identifizierende Menge von Signaturen erzeugt wird. Veränderungen des Computerprogramms sind durch dieses Verfahren besonders zuverlässig erkennbar, da eine Veränderung des Computerprogramms regelmäßig nur zu einer Änderung von wenigen Signaturen aus der Menge der Signaturen führt.

Zweckmäßig sind die Computerprogrammabschnitte durch Funktionen oder Unterprogramme des Computerprogramms ausgebildet. Vorteilhaft sind so Beziehungen von Computerprogrammen zueinander, die durch die Verwendung übereinstimmender oder wirkungsgleicher Funktionen oder Unterprogramme definiert sind, durch Vergleich der Signaturen ermittelbar.

Zweckmäßig umfasst das Gliedern des Computerprogramms in Computerprogrammabschnitte eine Rückübersetzung aus einem für einen Mikroprozessor unmittelbar ausführbaren Format in eine Assembler-Sprache.

Das Verfahren lässt sich vorteilhaft zur identifizlerung von zu einer Computerprogrammfamilie gehörenden Computerprogrammen verwenden. Eine Computerprogrammfamilie ist dabei dadurch definiert, dass mehrere Computerprogramme einen signifikanten Anteil gemeinsamer Funktionen aufweisen, wie es beispielsweise bei Fortentwicklungen von Computerprogrammen oder kleineren Abwandlungen des Computerprogramms der Fall ist. Dies ermöglicht insbesondere eine Vereinfachung der Analyse von Schadsoftware, da durch Erkennung einer Abwandlungen bereits bekannter Schadprogramme auf vorab erlangte Analyseergebnisse zurückgegriffen werden kann. Ebenfalls wird eine Identifikation von durch einen Patch geänderter Funktionen innerhalb einer Computerprogrammfamilie ermöglicht.

Ein vorteilhaftes Verfahren zum Vergleich eines maschinenausführbaren ersten Computerprogramms und eines maschinenausführbaren zweiten Computerprogramms zur Ermittlung eines Grads von Übereinstimmung umfasst die Schritte Anwenden des Verfahrens zur Kennzeichnung eines Computerprogrammabschnitts oder eines Computerprogramms auf das erste Computerprogramm oder einen Computerprogrammabschnitt des ersten Computerprogramms zur Erzeugung einer ersten Menge von das erste Computerprogramm identifizierenden Signaturen, Anwenden des Verfahrens zur Kennzeichnung eines Computerprogrammabschnitts oder eines Computerprogramms auf das zweite Computerprogramm oder einen Computerprogrammabschnitt des zweiten Computerprogramms zur Erzeugung einer zweiten Menge von das zweite Computerprogramm identifizierenden Signaturen, und Bestimmung des Grads der Übereinstimmung durch Differenzbildung zwischen der ersten Menge und der zweiten Menge von Signaturen. Hierdurch lassen sich auf einfache und zuverlässige Weise diejenigen Funktionen des ersten Computerprogramms und des zweiten Computerprogramme identifizieren, welche unterschiedliche abstrakte Programmablaufpläne aufweisen. Entsprechend erfolgt vorzugsweise eine Kenntlichmachung der Computerprogrammabschnitte, welche eine nicht in der Schnittmenge der ersten Menge und der zweiten Menge von Signaturen enthaltene Signatur aufweisen.

Vorteilhaft ist durch Verwendung des Verfahrens zum Vergleich eines maschinenausführbaren ersten Computerprogramms und eines maschinenausführbaren zweiten Computerprogramms eine Veränderung eines quelltextunbekannten Computerprogramms ermittelbar, in dem das Verfahren auf die ungeänderte und die geänderte Fassung des Computerprogramms angewendet wird.

Ein vorteilhaftes Verfahren zur Ermittlung von Veränderungen oder Übereinstimmungen eines in einem Computerspeichersystem eines lokalen Computers enthaltenen maschinenausführbaren Computerprogramms oder Computerprogrammabschnitts gegenüber wenigstens einem Referenzcomputerprogramm umfasst die Schritte Anwenden des erfindungsgemäßen Verfahrens zur Kennzeichnung eines Computerprogrammabschnitts oder eines Computerprogramms auf das Computerprogramm oder den Computerprogrammabschnitt zur Ermittlung wenigstens einer Signatur, Übertragen der wenigstens einen Signatur zu einem entfernten Computersystem, und Vergleich der übertragenen Signaturen mit einer Menge von auf dem entfernten Computersystem gespeicherten Signaturen zur Ermittlung einer Veränderung oder Übereinstimmung. Vorteilhaft kann durch dieses Verfahren die Echtheit von Software, also eine vollständige Übereinstimmung des im Computerspeichersystem des lokalen Computers enthaltenen Computerprogramms mit einem Referenzcomputerprogramm, ermittelt werden. Weiterhin ermöglicht das Verfahren eine effiziente und sichere Überprüfung von auf einem lokalen Computer ausgeführten Computerprogrammen auf schädigende oder unerwünschte Programmabschnitte, auch wenn deren spezifische binäre Form bisher noch unbekannt war. Zudem ermöglicht die Speicherung von Signaturen auf einem beispielsweise durch Netzwerkverbindungen wie dem Internet erreichbaren Computersystem die Einrichtung eines Suchdienstes zur Erkennung und Zuordnung von Computerprogrammen und Computerprogrammabschnitten, ähnlich der bekannten Internet-Suchdienste für Texte oder Multimedia-Dateien. Ein besonderer Vorteil ist dabei die von der spezifischen maschinenausführbaren Form eines Computerprogramms unabhängige Identifikation des Computerprogramms durch die wenigstens eine Signatur.

Weitere Vorteile und Merkmale der Erfindung ergeben sich aus der nachfolgenden Beschreibung bevorzugter Ausführungabeispiele und den abhängigen Ansprüchen.

Die Erfindung wird nachstehend unter Bezugnahme auf die anliegenden Figuren anhand eines bevorzugten Ausführungsbeispiels erläutert.
- Fig. 1: zeigt den Quelltext eines in der Hochsprache C geschriebenen Computerprogrammabschnitts.
- Fig. 2: zeigt den Quelltext aus Fig. 1 in einer Assembler-Sproche, wobei Segmente des Assembler-Quelltextes kenntlich gemacht sind.

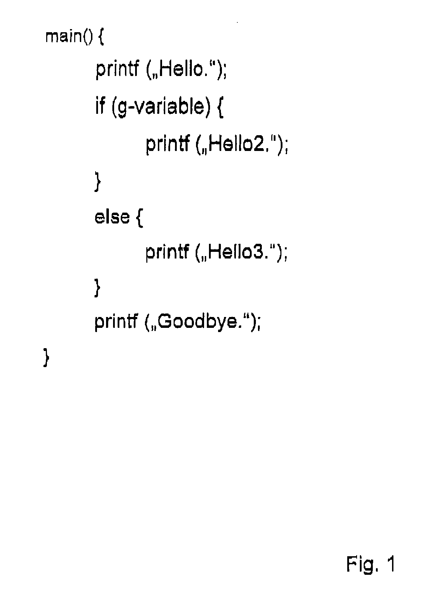

Der in Fig. 1 dargestellte Computerprogrammabschnitt ist in der Programmiersprache C abgefasst und umfasst eine einzige Funktion, die Hauptfunktion main() eines Computerprogramms. Die in dem Quelltext enthaltenen Anweisungen bewirken das Folgende: Zunächst wird durch Aufruf der Unterfunktion printf der Text "Hello." auf dem Bildschirm ausgegeben. Hieran schließt sich eine Programmablaufanweisung an, welche vorliegend als bedingte Verzweigung vom Typ einer if-else-Anweisung ausgebildet ist. Durch die Anweisung if (g-variable) wird getestet, ob die Variable g-vahable den Wert "TRUE" oder "FALSE" annimmt. Weist die Variable g-variable den Wert "TRUE" auf, so erfolgt eine Ausgabe von "Hello2.", anderenfalls erfolgt eine Ausgabe von "Hello3," auf dem Bildschirm mittels der Unterfunktion printf. Abschließend erfolgt durch Aufruf der Unterfunktion printf die Ausgabe von "Goodbye" auf dem Bildschirm.

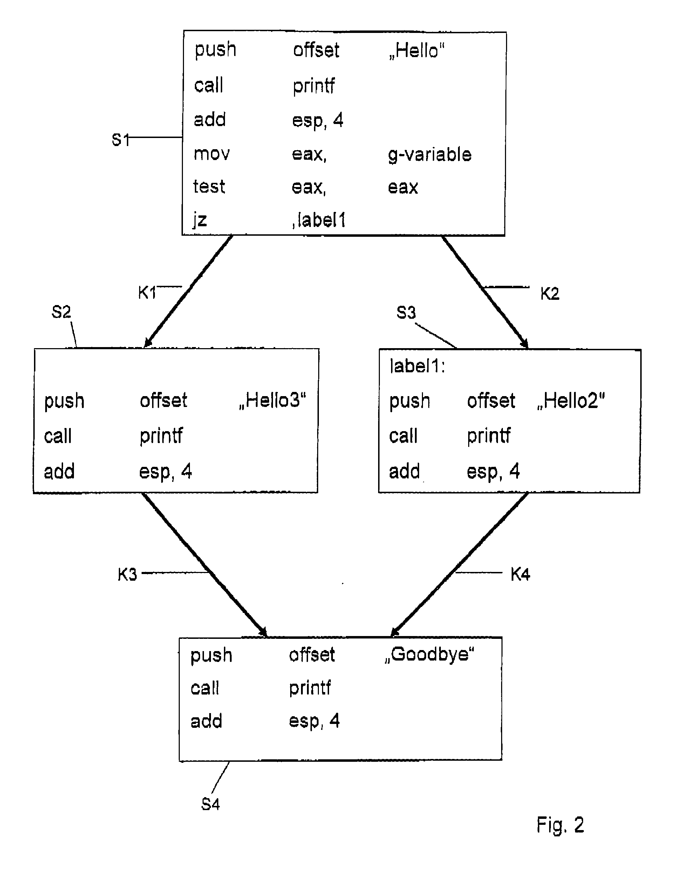

Fig. 2 zeigt einen dem Quelltext aus Fig. 1 zugeordneten Assembler-Quelltext. Der Assembler-Quelltext wurde vorliegend wie folgt erstellt: zunächst wurde der den Quelltext gemäß Fig. 1 mittels eines Compilers auf einem Computersystem in ein für den Mikroprozessor des Computersystems unmittelbar ausführbares Computerprogramm übersetzt. Das Computerprogramm umfasst dabei einen durch die Hauptfunktion definierten Computerprogrammabschnitt, der einer Realisierung des in Fig. 1 dargestellten Quelltexts entspricht. Durch Rückübersetzung (Disassemblierung) des Computerprogramms wurde der in Fig. 2 wiedergegebene Assembler-Quelltext des Computerprogramms erzeugt. Der Assembler-Quslltext ist in der Darstellung gemäß Fig. 2 in Segmente S1, S2, S3, S4 unterteilt. Erkennbar weist der Quelltext ein erstes Segment S1 auf, welches Anweisungen zum Aufruf des Unterprogramms printf und zur Ausgabe der Zeichenkette "Hello." auf dem Bildschirm umfasst. Das Segment S1 umfasst ferner Anweisungen zur Überprüfung des Wertes der Variablen g-variable und die Sprunganweisung jz. In Abhängigkeit von dem Wert der Variable g-variabie erfolgt eine Fortsetzung des Programms in dem Segment S2, in welchem Anweisungen zur Ausgabe der Zeichenkette "Hello3," auf dem Bildschirm enthalten sind, oder dem Segment S3, zur Ausgabe der Zeichenkette "Hello2.", Eine Fortsetzung des Programms erfolgt durch Sprung vom Ende des Segmente S2 beziehungsweise S3 an den Anfang des Segments S4 und die Ausgabe von "Goodbye" auf dem Bildschirm,

in der Darstellung gemäß Fig. 2 definieren die Segmente S1, S2, S3, S4 Knoten eines gerichteten Graphen. Sprunganweisungen, die jeweils Paare der Segmente S1, S2, S3, S4 miteinander verbinden, sind durch Pfeile dargestellt. Die Pfeile entsprechen den Programmablaufanweisungen des Computerprogramms und bilden Kanten K1, K2, K3, K4 des Graphen, Der in Fig. 2 dargestellte Graph weist somit vier Knoten und vier Kanten auf.

Das Verfahren zur Kennzeichnung des Computerprogrammabschnitts funktioniert nun automatisiert durch ein auf dem Mikroprozessor des Computersysteme ablaufendes Auswerteprogramm wie folgt:
Zunächst werden der Programmablaufbeziehung zwischen den Segmenten S1, S2, S3, S4 Kenndaten zugeordnet. Vorliegend erfolgt eine Zuordnung zu den Kanten K1, K2, K3, K4 des Graphen wie folgt:
   1. Bestimmung der topologischen Ordnung T des Quellknotens der Kante.
   2. Bestimmung des Eingangsgrads EQ des Quellknotens.
   3. Bestimmung des Ausgangsgrads AQ des Quellknotens.
   4. Bestimmung des Eingangsgrads EZ des Zielknotens.
   5. Bestimmung des Ausgangsgrads AZ des Zielknotens.

Für die Kanten K1, K2, K3, K4 gemäß Fig. 2 ergeben sich die in der folgenden Tabelle dargestellten Werte:

| | K1 | K2 | K3 | K4 |
|---|---|---|---|---|
| T | 0 | 0 | 1 | 1 |
| EQ | 0 | 0 | 1 | 1 |
| AQ | 2 | 2 | 1 | 1 |
| EZ | 1 | 1 | 2 | 2 |
| AZ | 1 | 1 | 0 | 0 |

Eine Verdichtung der Kenndaten zu einer Signatur funktioniert nun wie folgt:
Jeder Kante K1, K2, K3, K4 wird zunächst ein Vektor der ermittelten Kenndaten (T, EQ, AQ, EZ, AZ) zugeordnet. Anschließend wird jeder Kante durch Berechnung der ersten Funktion Z = T + EQ*sqrt(2) + AQ*sqrt(3) + EZ*sqrt(5) + AZ*sqrt(7), wobei sqrt( ) die mathematische Quadratwurzelfunktion bezeichnet, eine eindeutig bestimmte Zahl zugeordnet. Es ergibt sich die Zuordnung:

| K1 | K2 | K3 | K4 |
|---|---|---|---|
| 8,3459209 | 8,3459209 | 8,61840032 | 8,61840032 |

Als Signatur des Computerprogrammabschnitts ergibt sich somit die Zahlenmenge {Z1=8,3459209; Z2=8,3459209; Z3=8,81840032; Z4=8,61840032}. Eine weitere Verdichtung dieser Zahlenmenge erfolgt durch Erzeugung einer verdichteten Kennzahl V mittels einer zweiten Funktion, bestehtend aus der Addition der Kehrwerte der den Kanten K1, K2, K3, K4 zugeordneten Zahlen: V=1/Z1 + 1/Z2 + 1/Z3 + 1/Z4. Im vorgenannten Beispiel ergibt sich somit eine verdichtete Kennzahl V=0,471699652. Durch Summation der Kehrwerte 1/Z in der zweiten Funktion wird vorteilhaft eine Interaktion, insbesondere ein gegenseitiges Aufheben, von einzelnen Termen der ersten Funktion vermieden.

Als besonders wirkungsvolles Verfahren zum Vergleich von Computerprogrammen hat sich herausgestellt, die Computerprogramme daraufhin zu untersuchen, ob jeweils Paare von Computerprogrammabschnitten mit gleichen verdichteten Kennzahlen vorliegen, die sich gegenseitig aufrufen. Während das Auffinden von Computerprogrammabschnitten mit identischer verdichteter Kennzahl, Insbesondere bei Computerprogrammen geringen Umfangs, möglicherweise noch durch zufällige Übereinstimmung herrühren kann, ist eine zufällige Übereinstimmung von solchen Paaren von Computerprogrammabschnitten bei Anwendung auf realen Computerprogrammen mit nahezu vollständiger Sicherheit ausgeschlossen. Ein besonders vorteilhaftes Verfahren zur Kennzeichnung eines Computerprogramms ergibt sich somit dadurch, dass nach Gliederung des Computerprogramms in Computerprogrammabschnitte einer einen ersten Computerprogrammabschnitt mit einem zweiten Computerprogrammabschnitt verbindenden Kante jeweils die verdichtete Signatur des ersten Computerprogrammabschnitts und des zweiten Computerprogrammabschnitts als Kantensignatur zugeordnet wird. Kommt in zwei Computerprogrammen eine große Anzahl von identischen Kantensignaturen vor, ergibt sich hieraus ein entsprechendes Maß der Ähnlichkeit bzw. Übereinstimmung der Computerprogramme.

Vorstehend wurde das erfindungsgemäße Verfahren unter Bezugnahme auf ein Computerprogramm mit nur einer Funktion, der Hauptfunktion main(), erläutert. Es versteht sich, dass das Verfahren auch auf ein Computerprogramm mit einer Vielzahl von Funktionen und Unterprogrammen anwendbar ist, wobei zweckmäßig jede Funktion bzw. jedes Unterprogramm als Computerprogrammabschnitt gekennzeichnet wird. Die Anwendung des erfindungsgemäßen Verfahrens auf Computerprogramme üblichen Umfangs führt zu einer das Computerprogramm eindeutig identifizierenden Signatur, welche eine Zahlenmenge mit bis zu zehntausend oder mehr Elementen umfasst. Es versteht sich, dass in jedem Fall aus Signaturen mittels der vorgenannten zweiten Funktion verdichtete Signaturen erstellbar sind. Es versteht sich ferner, dass in jedem Fall eine Erzeugung von Kantensignaturen zum sofortigen oder späteren Vergleich mit anderen, möglicherweise noch unbekannten Computerprogrammen erfolgen kann.

## Patentansprüche

1. Verfahren zur Kennzeichnung eines in einem Computerspeichersystem enthaltenen Computerprogrammabschnitts, umfassend die Schritte
Zergliederung des Computerprogrammabschnitts in Segmente, wobei durch in dem Computerprogrammabschnitt enthaltene Programmbefehle eine Progammablaufbeziehung zwischen den Segmenten definierbar ist, und
Bestimmung von Kenndaten, die der Programmablaufbeziehung der Segmente zuordenbar sind,
**dadurch gekennzeichnet,**
**dass** die Kenndaten zu einer den Computerprogrammabschnitt identifizierenden Signatur verdichtet werden.

2. Verfahren nach Anspruch 1, **dadurch gekennzeichnet, dass** die Zergliederung eine Identifikation von Programmablaufanweisungen des Computerprogrammabschnitts umfasst, und dass die Bestimmung von Kenndaten eine Bestimmung von Daten von mittels einer Programmablaufanwelsung miteinander verbundener Segmente umfasst.

3. Verfahren nach Anspruch 1 oder 2, **dadurch gekennzeichnet, dass** die Programmablaufbeziehung der Segmente einen gerichteten Graphen mit Knoten und Kanten definiert, dass die Segmente Knoten des gerichteten Graphen bilden, und dass Programmablaufanweisungen Kanten des gerichteten Graphen bilden.

4. Verfahren nach Anspruch 3, **dadurch gekennzeichnet, dass** die Kenndaten jeweils einer Kante des gerichteten Graphen zugeordnet sind, und dass die Kenndaten wenigstens ein Kenndatum ausgewählt aus der Gruppe umfassend eine topologische Ordnung eines Knotens, die Anzahl der zu einem Knoten führenden Kanten und die Anzahl der von einem Knoten abgehenden Kanten umfassen.

5. Verfahren nach einem der Ansprüche 1 bis 4, **dadurch gekennzeichnet, dass** der Computerprogrammabschnitt in einer unmittelbar durch eine Verarbeitungseinheit eines Computers verarbeitbaren Form in dem Computerspeichersystem abgelegt ist.

6. Verfahren nach einem der Ansprüche 1 bis 5, **dadurch gekennzeichnet, dass** die Zergliederung ein Auswählen von Segmenten umfasst, und dass nur Kenndaten der ausgewählten Segmente zu einer identifizierenden Signatur verdichtet werden.

7. Verfahren nach einem der Ansprüche 1 bis 6, **dadurch gekennzeichnet, dass** der Computerprogrammabschnitt Teil eines in dem Computerspeichersystem ausführbar abgelegten oder durch einen Mikroprozessor ausgeführten Computerprogramms ist.

8. Verfahren zur Identifizierung wenigstens eines in einem Computerspeichersystem enthaltenen Computerprogramms, umfassend die Schritte
Gliederung des Computerprogramms in
Computerprogrammabschnitte, und
Anwendung des Verfahrens nach einem der Ansprüche 1 bis 7 auf wenigstens einen der Computerprogrammabschnitte zur Ermittlung einer den Computerprogrammabschnitt identifizierenden Signatur.

9. Verfahren nach Anspruch 8, **dadurch gekennzeichnet, dass** die Computerprogrammabschnitte durch Funktionen des Computerprogramms ausgebildet sind.

10. Verfahren nach Anspruch 8 oder 9, **dadurch gekennzeichnet, dass** das Computerprogramm Programmanweisungen umfasst, die in einem unmittelbar für einen Mikroprozessor ausführbaren Format vorliegen.

11. Verfahren nach einem der Ansprüche 8 bis 10, **dadurch gekennzeichnet, dass** das Gliedern des Computerprogramms in Computerprogammabschnitte eine Rückübersetzung aus einem für einen Mikroprozessor unmittelbar ausführbaren Format in eine Assemblersprache umfasst.

12. Verfahren zum Vergleich eines maschinenausführbaren ersten Computerprogramms und eines maschinenausführbaren zweiten Computerprogramms zur Ermittlung eines Grads von Übereinstimmung, umfassend die Schritte
Anwenden des Verfahrens nach einem der Ansprüche 1 bis 11 auf das erste Computerprogramm oder einen Programmabschnitt des ersten Computerprogramms zur Erzeugung einer ersten Menge von das erste Computerprogramm identifizierenden Signaturen,
Anwenden des Verfahrens nach einem der Ansprüche 1 bis 11 auf das zweite Computerprogramm oder einen Programmabschnitt des zweiten Computerprogramms zur Erzeugung einer zweiten Menge von das zweite Computerprogramm identifizierenden Signaturen, und
Bestimmung des Grads der Übereinstimmung durch Differenzbildung zwischen der ersten Menge und der zweiten Menge von Signaturen.

13. Verfahren nach Anspruch 12, weiter umfassend eine Kenntlichmachung der Computerprogrammabschnitte, welche eine Signatur außerhalb der Schnittmenge der ersten Menge und der zweiten Menge aufweisen.

14. Verfahren zur Ermittlung von Veränderungen oder Übereinstimmungen eines in einem Computerspeichersystem eines lokalen Computers enthaltenen maschinenausführbaren Computerprogramms oder Computerprogrammabschnitts gegenüber wenigstens einem Referenzcomputerprogramm, umfassend die Schritte
Anwenden des Verfahrens nach einem der Ansprüche 1 bis 11 auf das Computerprogramm oder den Computerprogammabschnitt zur Ermittlung wengstens einer Signatur,
Übertragen der wenigstens einen Signatur zu einem entfernten Computersystem, und
Vergleich der übertragenen Signatur mit einer Menge von auf dem entfernten Computersystem gespeicherten Signaturen zur Ermittlung einer Veränderung oder Übereinstimmung.

15. Verwendung des Verfahrens nach Anspruch 7 zur Identifizierung von Schadsoftware im laufenden Betrieb eines Computersystems, des Verfahrens nach einem der Ansprüche 8 bis 11 zur Identifizierung von zu einer Computerprogrammfamilie gehörenden Computerprogrammen, des Verfahrens nach Anspruch 12 oder 13 zur Ermittlung von Veränderungen eines quelltextunbekannten Computerprogramms oder des Verfahrens nach Anspruch 14 zur Überprüfung der Echtheit von Software.
